**Europäisches Patentamt**

(19) **European Patent Office**

**Office européen des brevets**

(11) Veröffentlichungsnummer: **0 244 583**
**B1**

(12) # EUROPÄISCHE PATENTSCHRIFT

(45) Veröffentlichungstag der Patentschrift:
06.12.89

(21) Anmeldenummer: **87102852.8**

(22) Anmeldetag: **27.02.87**

(51) Int. Cl.⁴: **B65D 25/08**, B65D 81/32,
B65D 51/32

(54) **Spritzkartusche gefüllt mit wenigstens zwei voneinander getrennten Komponenten eines aushärtbaren Bindemittels.**

(30) Priorität: **25.04.86 DE 3614025**

(43) Veröffentlichungstag der Anmeldung:
**11.11.87 Patentblatt 87/46**

(45) Bekanntmachung des Hinweises auf die Patenterteilung:
**06.12.89 Patentblatt 89/49**

(84) Benannte Vertragsstaaten:
**AT BE CH ES FR GB IT LI NL**

(56) Entgegenhaltungen:
**DE-A- 2 800 587**
**DE-A- 3 439 975**
**US-A- 3 144 966**
**US-A- 3 162 338**

(73) Patentinhaber: **fischer-werke Artur Fischer GmbH & Co.**
**KG, Weinhalde 14-18,**
**D-7244 Waldachtal 3/Tumlingen(DE)**

(72) Erfinder: **Fischer, Artur, Dr. h. c., Weinhalde 34,**
**D-7244 Waldachtal 3/Tumlingen(DE)**

ACTORUM AG

**Beschreibung**

Die Erfindung betrifft eine Spritzkartusche gefüllt mit wenigstens zwei voneinander getrennten Komponenten eines aushärtbaren Bindemittels, wobei eine Komponente in einem in der Spritzkartusche angeordneten und gegen einen die Spritzkartusche verschließenden Spritzkolben abgedichteten Mischstab enthalten ist, der an seinem in der Spritzkartusche befindlichen Ende mit radial abstehenden Mischflügeln und am anderen aus der Spritzkartusche ragenden Ende mit einer abnehmbaren Verschlußkappe versehen ist, mit der der Mischstab zur Öffnung seines abgedichteten Endes zurückziehbar und nach Abnahme der Verschlußkappe die im Mischstab befindliche Komponente mit einem der Länge des Mischstabes entsprechenden stabförmigen Teil ausdrückbar ist, wobei am stabförmigen Teil Mittel angeordnet sind, mit denen eine dreh- und zugfeste Verbindung zwischen dem stabförmigen Teil und dem Mischstab herstellbar ist.

Aus der DE-A 3 439 975 ist eine Spritzkartusche der eingangs beschriebenen Art bekannt, die ein zylindrisches Gehäuse mit einem darin verschieblichen Spritzkolben aufweist. Eine Komponente des aushärtbaren Bindemittels ist in dem rohrförmig ausgebildeten Mischstab eingefüllt, der gegen die Stirnseite des Spritzkolbens abgedichtet ist. Zum Vermischen der Komponenten wird der Mischstab mit der auf das außerhalb der Spritzkartusche befindliche Ende des Mischstabes aufgesetzten Verschlußkappe zurückgezogen, so daß sich das in der Spritzkartusche befindliche Ende des Mischstabes öffnet. Mit einem stabförmigen, einen Handgriff aufweisenden Teil wird die im Mischstab befindliche Komponente des Bindemittels in die andere Komponenten des Bindemittels enthaltende Spritzkartusche ausgedrückt. Das stabförmige Teil ist mit dem Mischstab verbindbar, so daß nunmehr durch Hin- und Herbewegen des Mischstabes die Komponenten des Bindemittels mit den am Mischstab angeordneten Mischflügeln innig durchmischt werden. Danach wird durch Betätigung des Spritzkolbens das Bindemittel aus der Spritzkartusche beispielsweise zum Einmörteln eines Ankers in einem Bohrloch ausgespritzt.

Voraussetzung für eine ordnungsgemäße Aushärtung des Bindemittels ist die innige Vermischung der Komponenten. Da es sich in der Regel bei den Binde mitteln um sehr zähe Massen handelt, ist diese innige Vermischung durch Hin- und Herbewegen des Mischstabes von Hand ein zeit- und kraftaufwendiger Vorgang, was insbesondere bei Serienmontagen nachteilig ins Gewicht fällt.

Aufgabe der Erfindung ist es, eine Spritzkartusche der eingangs genannten Art so zu verbessern, daß eine schnelle und ordnungsgemäße Vermischung der Komponenten maschinell möglich ist.

Erfindungsgemäß wird dies dadurch erreicht, daß an dem stabförmigen Teil ein in die Aufnahme einer Handbohrmaschine bzw. eines Bohrhammers passender Einspannschaft angeordnet ist.

Mit dem an dem stabförmigen Teil angeordneten Einspannschaft ist dieses Teil in eine Handbohrmaschine bzw. einen Bohrhammer einspannbar. Zum Ausdrücken der im Mischstab befindlichen Komponente wird das Teil in den Mischstab eingeführt und bei eingeschaltetem Drehgang der Bohrmaschine eingeschoben. Das letzte Stück des stabförmigen Teiles setzt sich durch die an ihm angeordneten Mittel in der Innenbohrung des Mischstabes fest, so daß nach dem vollständigen Auspressen der Komponente der Mischstab sich nunmehr mitdreht. Durch des Drehen das Mischstabes bei gleichzeitiger Hin- und Herbewegung entsteht eine sehr innige Vermischung der Komponenten in der Spritzkartusche ohne körperliche Kraftanstrengung. Durch die zusätzliche Drehbewegung wird ferner die Mischzeit gegenüber der Handmischung erheblich reduziert.

In weiterer Ausgestaltung der Erfindung kann das an dem stabförmigen Teil zur Herstellung der dreh- und zugfesten Verbindung angeordnete Mittel eine sich in die Innenwandung des Mischstabes einschneidende wendelförmig angeordnete Rippe sein.

Diese Art der Verbindung zwischen dem stabförmigen Teil und dem Mischstab läßt nach dem Vermischen ein leichtes Lösen der Verbindung wieder zu. Das stabförmige Teil ist somit mehrfach zu verwenden.

In der Zeichnung ist ein Ausführungsbeispiel der Erfindung dargestellt.

Es zeigen:

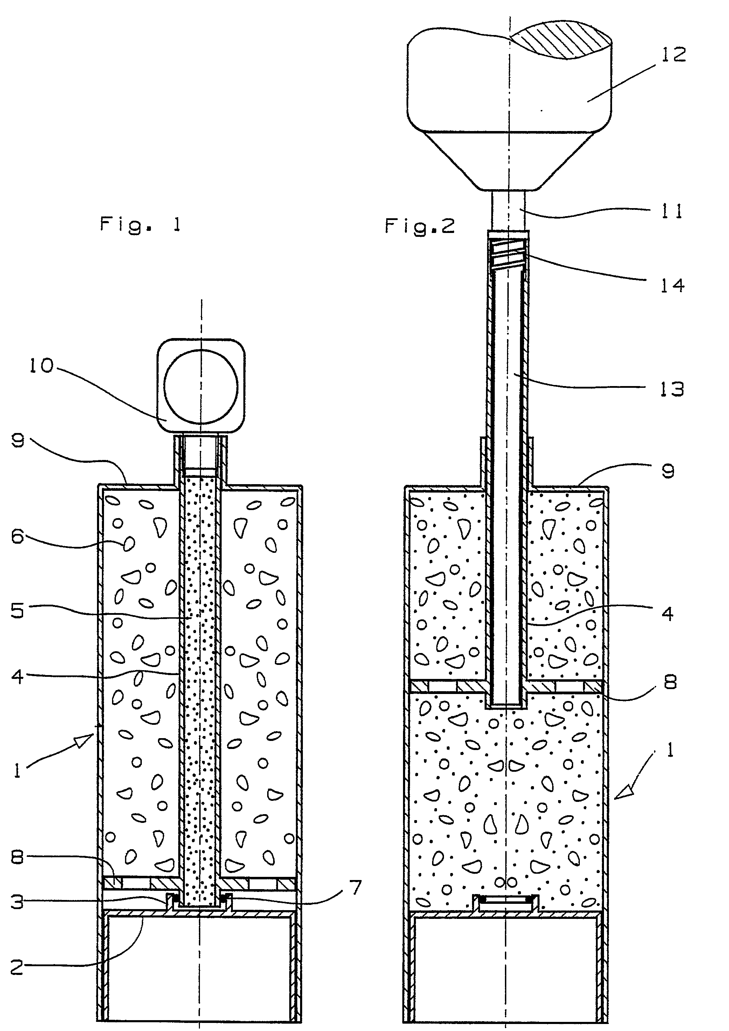

Figur 1 die Spritzkartusche im Schnitt
Figur 2 die Spritzkartusche beim Mischvorgang.

Die offene Seite des Gehäuses der Spritzkartusche 1 ist mit einem napfförmigen Spritzkolben 2 verschlossen, der an seiner inneren Stirnseite mit einem zylinderförmigen Stutzen 3 versehen ist. In diesem Stutzen 3 befindet sich das in der Spritzkartusche befindliche Ende des rohrförmigen Mischstabes 4, der mit einer Komponente 5 des aushärtbaren Bindemittels gefüllt ist. Zur Verbesserung der Abdichtung gegenüber den in der Spritzkartusche befindlichen Komponenten 6 des Bindemittels ist in der Innenwandung des Stutzens 3 ein 0-Ring 7 eingelegt, der an der Außenfläche des Mischstabes 4 anliegt. An diesem Ende des Mischstabes sind radial abstehende Mischflügel 8 angeordnet, die sich bis zur Gehäuseinnenwand der Spritzkartusche 1 erstrecken. Das andere Ende des Mischstabes 4 überragt die geschlossene Stirnseite 9 der Spritzkartusche 1 und ist mit einer auf dieses Ende aufgeschraubten Verschlußkappe 10 verschlossen. Mit dieser Verschlußkappe 10 wird der Mischstab 4 aus dem Stutzen 3 des Spritzkolbens 2 soweit zurückgezogen, bis die Mischflügel 8 an der Stirnseite 9 der Spritzkartusche 1 anstoßen.

Nach dem Entfernen der Verschlußkappe 10 wird das mit seinem Einspannschaft 11 in einer Handbohrmaschine 12 eingespannte stabförmige Teil 13 in den Mischstab 4 eingeschoben und die im Mischstab befindliche Komponente in die Spritzkartusche ausgepreßt. Durch den eingeschalteten Drehgang der Bohrmaschine 12 schneidet sich die am Ende des stabförmigen Teiles 13 wendelförmig angeordnete Rippe 14 in dei Innenwandung des Mischstabes 4 ein, so daß eine dreh- und zugfeste Verbindung zwischen dem stabförmigen Teil 13 und dem Mischstab 4 entsteht. Der Mischstab 4 wird nunmehr über das stabförmige Teil 13 in Rotation versetzt. Durch gleichzeitiges Hin- und Herbewegen des Mischstabes 4 mit der Bohrmaschine erfolgt nunmehr eine innige Ver mischung der Komponenten des Bindemittels in der Spritzkartusche über die am Mischstab 4 angeordneten Mischflügel 8. Nach Beendigung des Mischvorganges wird der Mischstab 4 wieder bis zur Anlage der Mischflügel 8 an der Stirnseite 9 der Spritzkartusche 1 zurückgezogen und gleichzeitig das stabförmige Teil 13 aus dem Mischstab 4 herausgedreht und ausgezogen. Unter Verwendung einer Spritzvorrichtung wird durch Eindrücken des Spritzkolbens 2 das Bindemittel aus dem nunmehr als Spritzdüse dienenden Mischstab 4 beispielsweise zur Verankerung eines Befestigungselementes ausgespritzt.

## Patentansprüche

1. Spritzkartusche gefüllt mit wenigstens zwei voneinander getrennten Komponenten eines aushärtbaren Bindemittels, wobei eine Komponente in einem in der Spritzkartusche (1) angeordneten und gegen einen die Spritzkartusche verschließenden Spritzkolben (2) abgedichteten Mischstab (4) enthalten ist, der an seinem in der Spritzkartusche befindlichen Ende mit radial abstehenden Mischflügeln (8) und am anderen aus der Spritzkartusche ragenden Ende mit einer abnehmbaren Verschlußkappe (10) versehen ist, mit der der Mischstab zur Öffnung seines abgedichteten Endes zurückziehbar, und nach Abnahme der Verschlußkappe die im Mischstab befindliche Komponente (5) mit einem der Länge des Mischstabes entsprechenden stabförmigen Teil (13) ausdrückbar ist, wobei am stabförmigen Teil dadurch gekennzeichnet, daß an dem stabförmigen Teil ein in die Aufnahme einer Handbohrmaschine bzw. eines Bohrhammers (12) passender Einspannschaft (11) angeordnet ist Mittel (14) angeordnet sind, mit denen eine dreh- und zugfeste Verbindung zwischen dem stabförmigen Teil und dem Mischstab herstellbar ist.

2. Spritzkartusche nach Anspruch 1, dadurch gekennzeichnet, daß das an dem stabförmigen Teil (13) zur Herstellung der dreh- und zugfesten Verbindung angeordnete Mittel eine sich in die Innenwandung des Mischstabes einschneidende wendelförmig angeordnete Rippe (14) ist.

## Claims

1. Injection cartridge filled with at least two components of a hardenable fixing agent that are separate from one another, one component being contained in a mixing rod (4) that is arranged in the injection cartridge (1) and is sealed against an injection plunger (2) closing the injection cartridge and the end of the mixing rod located inside the injection cartridge being provided with radially projecting mixing blades (8) and the other end of the mixing rod, which projects out of the injection cartridge, being provided with a removable closure cap (10) by means of which the mixing rod can be pulled out in order to open its sealed end, and, after the closure cap has been removed, the component (5) located in the mixing rod can be expelled by means of a rod-shaped part (13) corresponding in length to the mixing rod, there being arranged on the rod-shaped part means (14) with which a torsionally-secure and tensionally-secure connection can be produced between the rod-shaped part and the mixing rod, characterised in that there is arranged on the rod-shaped part a clampable shank (11) that fits into the chuck of a hand and/or hammer drill (12).

2. Injection cartridge according to claim 1, characterised in that the means arranged on the rod-shaped part (13) in order to produce the torsionally-secure connection is a helically arranged rib (14) that cuts into the inner wall of the mixing rod.

## Revendications

1. Cartouche à injection remplie d'au moins deux composants, séparés l'un de l'autre, et formant ensemble un liant durcissable, l'un des composants étant contenu dans une tige mélangeuse (4) disposée dans la cartouche (1) à injection et séparée de manière étanche d'un piston (2) d'injection obturant la cartouche à injection, cette tige (4) comportant, à son extrémité situé dans la cartouche à injection, des ailettes (8) mélangeuses s'éloignant radialement de cette tige (4) et, à l'autre extrémité de cette tige, faisant saillie à l'extérieur de la cartouche à injection, un capuchon (10) amovible permettant de retirer la tige mélangeuse pour en ouvrir l'extrémité fermée de manière étanche et, après enlèvement du capuchon, le composant (5) contenu dans la tige mélangeuse pouvant être refoulé à l'aide d'un élément (13) en forme de tige dont la longueur correspond à la longueur de la tige mélangeuse, l'élément (13) en forme de tige étant associé à des organes (14) permettant de réaliser, entre l'élément en forme de tige et la tige mélangeuse, une liaison de solidarisation pouvant résister à une rotation et à une traction, cartouche caractérisée en ce qu'une tige (11) d'insertion, correspondant à l'élément récepteur faisant partie d'une perceuse à main ou d'un marteau perforateur (12), est montée sur l'élément en forme de tige.

2. Cartouche à injection selon la revendication 1, caractérisée en ce que l'organe associé à l'élément (13) en forme de tige pour réaliser la liaison capable de résister à une rotation et à une traction est une nervure (14) de forme hélicoïdale découpée dans la paroi intérieure de la tige mélangeuse.

Fig. 1

Fig.2